# EUROPEAN PATENT SPECIFICATION

(11) **EP 2 774 812 B1**
(45) Date of publication and mention of the grant of the patent: **30.10.2019**
(21) Application number: 14158341.9
(22) Date of filing: 07.03.2014
(51) Int. Cl.: B60P 3/00, B60P 7/10

(54) **Method for manufacturing of a concrete element**
Verfahren zur Herstellung eines Betonelements
Procédé de fabrication d'un élément en béton

(30) Priority: 08.03.2013 FI 20135219
(43) Date of publication of application: 10.09.2014
(73) Proprietor: Sora ja Betoni, V. Suutarinen Oy, 52700 Mäntyharju (FI)
(72) Inventor: Suutarinen, Timo, 52700 Mäntyharju (FI)
(74) Representative: Helke, Kimmo Kalervo

(56) References cited:
- EP-A1- 0 190 744
- WO-A1-89/10293
- DE-A1- 4 027 864
- US-A- 5 209 540

## Description

The present invention relates to a method for manufacturing of a concrete element, in which method during the manufacturing of a concrete element, the concrete element is supported on a rack, and the rack is moved with a transfer car, which transfer car is equipped with a frame structure forming part of the transfer car, which frame structure includes two essentially parallel frames, which extend on both side of the rack.

At a concrete-element factory, a sandwich-type concrete element can be made, for example, in the following manner. The inner and outer shells are cast in a horizontal position, in such a way that first the outer shell, into which cast concrete ties are set, is cast in the form. After this, one or more insulating layers are set on top of the outer shell, on top of which the inner shell is cast. The ties extend into the inner shell, so that a unified insulated concrete element is formed of the shell structures and the insulation. For example, the inner shell can be a 150-mm thick reinforced-concrete casting, to which is attached 180-mm thick polyurethane insulation and a 70-mm thick reinforced-concrete outer shell.

In the prior art, after casting, the form is tipped into a vertical position and the concrete element is moved to post-treatment, which can include, for example, washing, sand blasting, repair of casting faults, and other general finishing. At the element factory, the concrete element, which has been tipped into a vertical position, is placed in a cradle-like rack, which can be moved to various post-treatment and finishing operations. After post-treatment, the concrete element is lifted out of the rack, usually by a gantry crane, to storage racks, from where it is lifted, for example, to be taken by truck to the building site.

The cradle-like rack can travel along rails, or on wheels on the floor. Rails are rigid and prevent a flexible flow at the element factory. Wheels, on the other hand, require a sturdy and even floor. A rack of special construction has been developed, which is moved on a transfer car of adjustable height. In practice, the rack is so wide, that when the transfer car is under the rack, it is between two concrete elements standing vertically at an angle. In practice, the transfer car is run under the rack and, by altering the height of the transfer car, the rack is lifted onto the transfer car. The rack can then be moved from one post-treatment operation to another. In addition, a single transfer car can be used to move different racks one after the other, which increases the flexibility of production. Counterbalanced fork-lift trucks, for example, can be used to move the transfer car.

However, there are drawbacks and clear limitations in the prior art. For example, a rack containing two concrete elements is unreasonably wide, in practice nearly four metres wide. The internal spaces of the element factory must then be made large, which increases manufacturing costs. The wide structure also demands a strong rack structure, which inevitably becomes heavy. Further, tilted concrete elements are difficult to post-treat. For example, a scissors platform brought next to the rack will remain far from the upper edge of the concrete element. The post-treater must stretch farther the higher he rises. Despite the rack, the concrete element must be lifted many times, at least from the tipping station to the rack, from the rack to the store, and from the store again to the truck. Each lift increases the risk of damaging the concrete element and requires a great deal of crane equipment.

DE 4027864 A1 discloses a special transport vehicle comprising a U-section semitrailer chassis open to the rear and rigid longitudinal beams for an internal loading mechanism. The beams are situated between wheels lowered by air bellows and are of angular section for the loaded frames or pallets, secured by top fasteners.

The invention is intended to create a new type of method for manufacture of a concrete element, which is not only more flexible, but also more efficient than previously. The characteristic features of the method according to the present invention are stated in the accompanying Claim 1. The construction and operating principle of the transfer car make it unique. The transfer car is also easily controllable. By utilizing the transfer car, the production of an element factory can be arranged in a new way and thus made more efficient. At the same time, the equipment of the element factory can be made lighter and some equipment can even be eliminated altogether. What is important is the reduction in the number of lifts of the concrete elements from the known system. At the same time, damage to the concrete elements will be reduced and work safety improved.

In the following, the invention is described in detail with reference to the accompanying drawings showing some embodiments of the invention, in which
- Figure 1a: shows a front view of the rack according to the invention,
- Figure 1b: shows a cross-section of a combination of the rack and the transfer car,
- Figure 2: shows a front view of the rack according to the invention, loaded with two different concrete elements,
- Figures 3a - c: show three different racks according to the invention,
- Figure 4: shows a side view of the transfer car according to the invention,
- Figure 5: shows a top view of part of the transfer car according to the invention,
- Figure 6: shows a schematic view of part of an element factory,
- Figure 7a: shows a cross-section of the transfer car of Figure 5,
- Figure 7b: shows a cross-section of a third embodiment of the transfer car according to the invention.

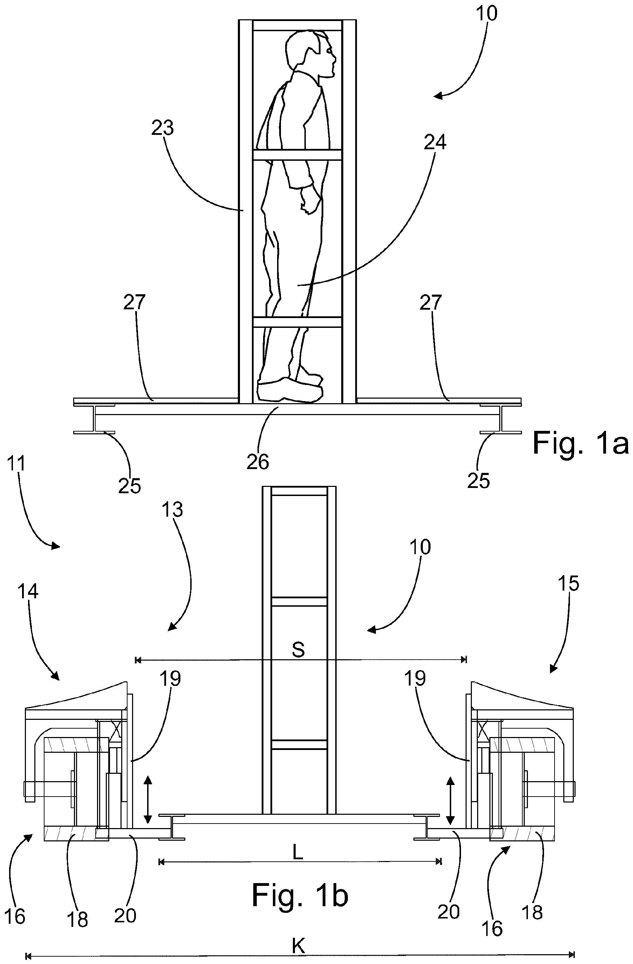

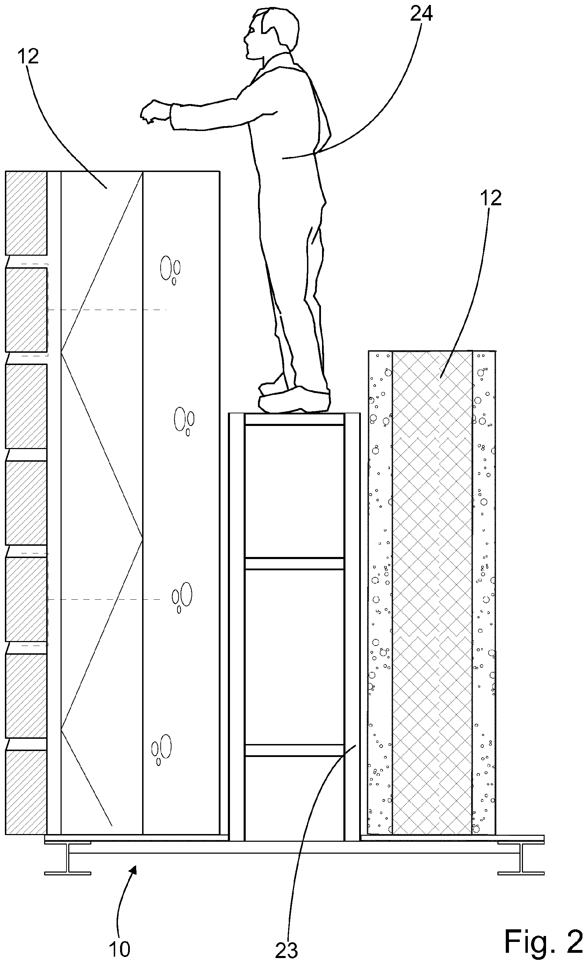

Figure 1a shows a rack 10 which in Figure 1b is held on a transfer car 11. The transfer car is used in the manufacture of a concrete element, in which the concrete element 12 is supported on the rack 10 (Figure 2). In addition, the transfer car 11 is arranged to move the rack 10. The frame structure 13 belonging to the transfer car 11 includes two essentially parallel frames 14 and 15, which are arranged to extend on both sides of the rack 10. This can be seen especially in Figure 1b. By means of such a combination many advantages are gained. First of all, the rack can be made narrow, without nevertheless restricting an operative's access to every point on the concrete element. In addition, the transfer car can be made low and of a simple construction. At the same time, the rack, together with the concrete element is located between the frames, so that the combination is given good stability.

The narrow rack is suitable for moving even thick concrete elements. This is implemented in such a way that the distance S between the frames 14 and 15 at the effective height of the rack 10 is substantially greater than the total width L of the rack 10. More specifically, the transfer car extends inside the rack in the vicinity of the base, but the actual frames are clearly farther away. Thus, the concrete element can be supported on the rack, in such a way that it can extend outside the width of the rack. Nevertheless, the rack together with the concrete elements fits between the frames. For example, the distance S referred to in the embodiment is 1700 - 2000 mm, the total width of the rack being 1560 mm. Correspondingly, the total width K of the transfer car 11 is 3000 - 3500 mm, which is considerably less than the width of a known rack.

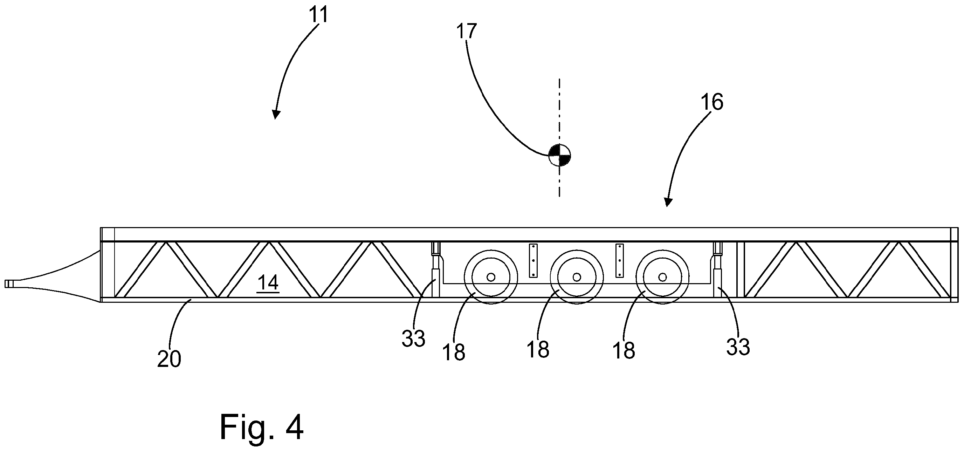

Figure 4 shows a side view of the transfer car 11. Each frame 14 and 15 includes a lifting-wheel unit 16, which is located within the area of the centre of gravity 17 of the transfer car 11. By means of the lifting-wheel unit, the height of the transfer car can be altered and thus the rack lifted off the base. The lifting-wheel unit is essentially in the centre of the frame longitudinally, so that main of the mass of the concrete element and the rack is directed precisely to the lifting-wheel units. Thus a light towing vehicle is sufficient to move the transfer car. At the same time, the transfer car becomes easily steered. Figure 4 also shows lifting cylinders 33, which are located in front of and behind the lifting-wheel unit 16. The lifting cylinders preferably rise simultaneously by the same amount, so that the transfer car rises evenly. Simultaneity can be achieved, for example, by means of load-equalization valves.

The lifting-wheel unit 16 is preferably arranged to be steerable, which makes the combination extremely controllable. The handling of the racks will then require little space and they will be easy and versatile to move. The lifting-wheel unit 16 preferably contains several wheels 18, the amount of rise of which can be arranged independently of each other. By adjusting the height of each wheel, the transfer car can be adapted to travel over an uneven base too. The floor of an element factory is generally level and flat, but outdoors there can be various slopes and discontinuity points in the ground.

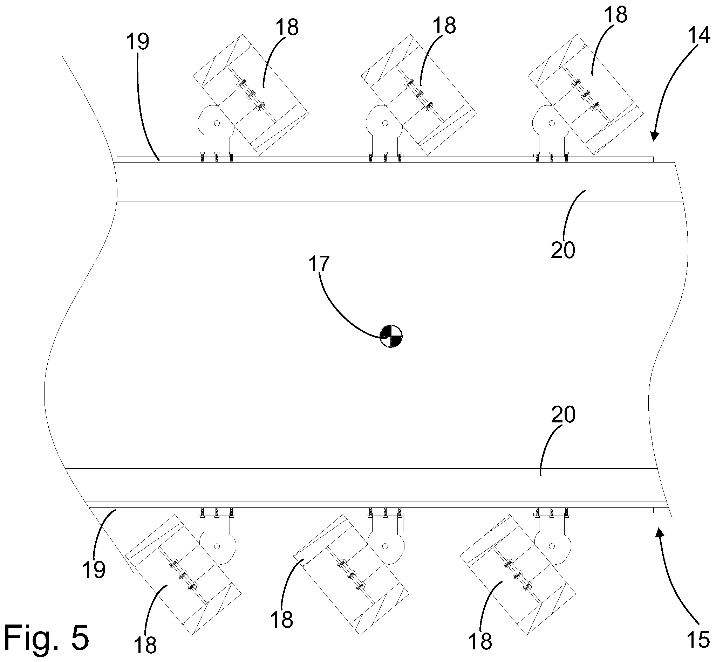

Figure 5 shows cross-sections of the frames 14 and 15, only at the location of the lifting-wheel units 16. In this case too, each wheel 18 turns by several tens of degrees, which will increase the steerability of the transfer car. When travelling in a curve, the wheel can turn to different angles (not shown), but by turning all the wheels to the same angle a transverse movement of the rack is achieved (as in Figure 5). The wheels are turned by manual control, but logic control or similar can be used to facilitate the control of the transfer car. In one or more wheels of the lifting-wheel unit there can be a brake, or even a drive. Instead of the lifting-wheel unit, some other construction can be used to lift the rack off the base.

The frames 14 and 15 are similar, but are a mirror-image of each other. In addition, they are connected to each other only at the front part, forming an open U-shaped structure. Thus, the transfer car can be pushed around the rack, so that one frame is on each side of the rack. The frame includes a long vertical frame plate 19, to which a strong lifting plate 20 is attached. These plate structures form a rigid, load-bearing frame and the lifting-wheel units are attached to them.

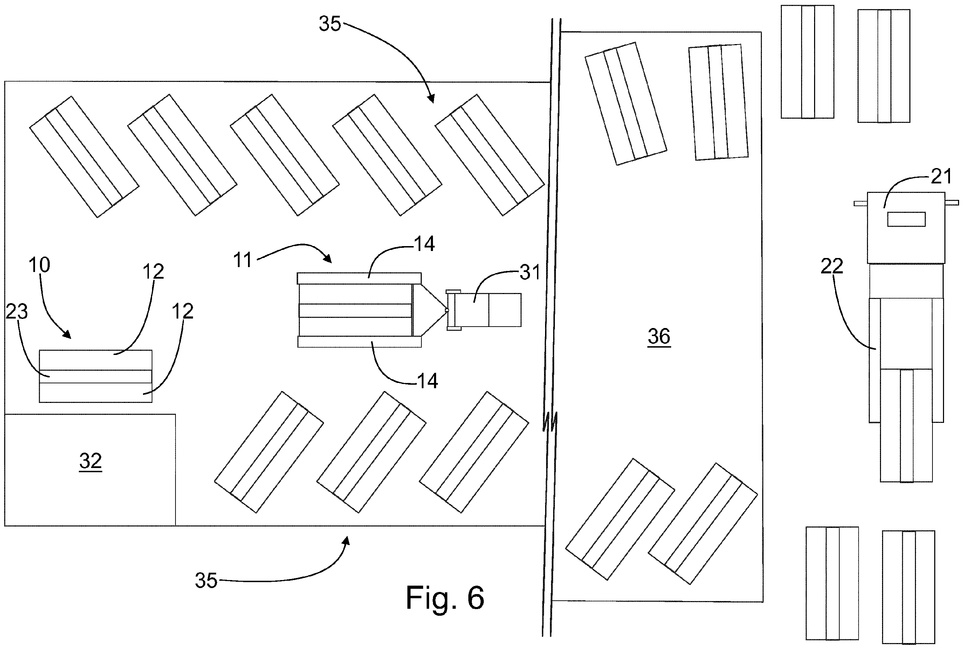

A new type of rack in used in the invention, and thus also a different kind of production logistics, i.e. system. Generally, the system includes a rack 10 for supporting the concrete element 12 and a transfer car 11 for moving the rack 10 in the manufacture of the concrete element 12. In the system according to the invention, both the rack and the transfer car are of a new type. The rack 10 is also arranged to be a storage rack for the concrete element 12. Thus, separate racks in the store and even a separate store itself become unnecessary. At the same time, a gantry crane will be required less and in a smaller area than before, which will simplify the layout and equipment of the element factory. Figure 6 shows parts of a concrete-element factory. In the lower part is the environment of a tipping station 32 as well as several post-treatment stages 35. Correspondingly, in the upper part is a store 36, in which the racks according to the invention are now used as storage racks. In other words, the concrete elements are moved using a transfer car without intermediate lifts, supported on a rack. In addition, the system includes several racks 10 to each transfer car 11. Thus, the internal logistics of the factory can be taken care of by a transfer car, from manufacture to storage and even to transfer transportation.

In addition to simplifying production and storage, logistics has also been given greater consideration in the system. Preferably, the rack 10 is also suitable as a concrete-element 12 transportation rack. Thus, one and the same rack can be used from the tipping station right to the building site. At the same time, the numbers of times that the concrete element must be lifted are minimized. In practice, the number of lifts is reduced to a third compared to the known technology. In the best case, one lift from the tilting station to the rack and then a second lift from the rack to the building will be sufficient. Compatibility is implemented in such a way that the width of the rack corresponds essentially to the nominal internal width of a known self-loading vehicle trailer. In that case, the rack with the concrete element can be left in the element factory yard, from where it is picked up by a semitrailer combination. In Figure 6, a vehicle 21 is just reversing its trailer 22 around a rack 10 loaded with a concrete element. Thanks to the self-loading trailer, the rack is put on the vehicle without external means. When concrete elements are fetched the next time, the empty rack is returned to the element factory. On the other hand, the vehicle can have its own rack, which is used already in production. The uniform dimensioning of the devices links production seamlessly to external transportation.

The elements are preferably placed vertically in the rack, which takes up little space. In addition, the new type of transfer car is used, which extends to the sides of the rack without going under it. Thus the transfer car can be made low and narrow. At the same time, the rack becomes low and simple.

After the tipping station, the concrete elements are lifted onto a rack according to the invention, which is narrower and simpler than conventional racks. Despite this, the concrete elements are well supported, as they are firmly against the bottom of the rack and, in addition, the concrete elements are secured at the top to the rack, for example, by chains. In the embodiment shown, the rack 10 includes a framework 23 placed into the middle, which for its part stiffens the structure of the rack and permits the a concrete element to be secured. In addition, the framework 23 is dimensioned in such a way that an operative 24 can move on top of the framework 23 and even inside it (Figure 1a) and easily reach over the whole area of the concrete element 12 when examining it and post-treating it. In the invention, the top of the framework 23 is arranged as a walkway 34. At the same time, there is unimpeded access from outside the rack to every point of the concrete element, without having to stretch.

After tipping, the concrete element is set vertically in the rack. In practice, it is sufficient for the inner shell to be supported on the rack, in which case the insulation and outer shell can even be outside the rack. In the invention, the space delimited by the framework 23 in the rack 10 is less than the thickness of the concrete element 12. In the vertical position, the concrete element is easy to post-treat. Generally it is mainly the outer shell that needs to post-treat. In addition, the rack is narrow, so that the element factory can be made compact. The concrete elements can also be stored in the racks, when separate storage racks will be unnecessary and the number of lifts of the concrete elements minimized. In other words, the concrete elements are in the racks not only during production, but also during storage and even transportation. The rack according to the invention is considerably simpler and lighter than known racks, so that the capital sunk in them is considerably less than before. At the same time, the element factory storage can be simplified and the gantry crane too will be required less than before.

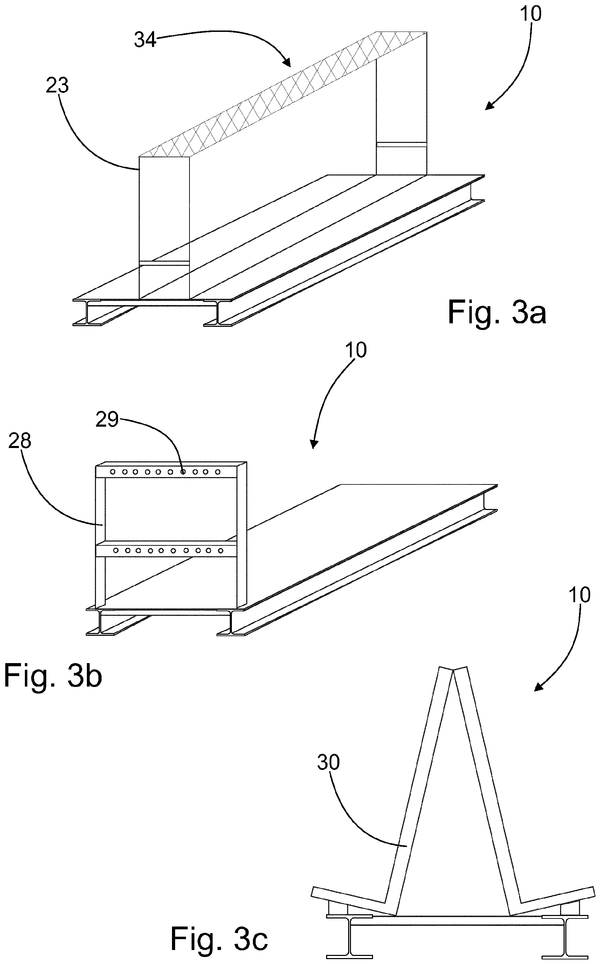

Figure 1a shows a front view of the rack 10 according to the invention. Here the basic frame is formed of two profile beams 25, which extend over the entire length of the rack 10. The profile beams 25 are joined to each other by several transverse beams 26, forming a ladder structure. Correspondingly, the framework 23 referred to above, which extends over the entire length of the rack, is attached to the transverse beams, forming a light but durable rack. The concrete elements can be lifted on top of the transverse beams, but the base frame can also include a board or plate construction forming the base, which is fitted on top of the transverse beams and profile beams. In Figure 1a, the board construction 27 is of plywood. In Figure 3a, the framework 23 is shown schematically. What is important, however, is the open construction of the framework, so that if necessary there is unimpeded access to the vicinity of the inner shell.

Figure 3b shows a second embodiment of the rack 10, which includes an end support 28. Pins, on which the vertical concrete elements can be supported, can be fitted into holes 29 in the end support 28. There can be an end support at both ends of the rack. Figure 3c shows a third embodiment of the rack. In this case, the rack includes an A-shaped trestle 30, on which so-called part-shell concrete elements can be set. In part-shell concrete elements there can be, for example, a window opening, so that the shape of the concrete element is irregular. However, in the A-shape trestle such a concrete element is well supported, which permits safe moving, storage, and transportation. The A-shape trestle is preferably made in such a way that a walkway runs along its upper part.

Good rigidity is achieved by means of the profile beams, but the profile beams have a greater importance. According to the invention, the profile beams act at the same time as lifting stops, to which the lifting plates of the transfer car are attached. This simplifies the construction of the system and the connection between the transfer car and the rack is ensured without complicated structures. If necessary, for certainty the rack can also be secured to the transfer car with some attaching means.

In Figure 2, the concrete element 12 is set in the rack 10. Here, the inner shell of the concrete element is against the base of the rack. Correspondingly, the outer shell and part of the insulation can be outside the rack. Thus, a single type of rack will work with concrete elements of different thickness. Usually, there are lifting loops in the upper edge of the concrete element, from which the concrete element can be attached to the framework. When the concrete element 12 is vertical, the operative 24 can easily reach to different parts of the concrete element 12.

Figure 1b shows the transfer car 11 according to the invention. In the invention, instead of a transfer car to be placed under the rack, a transfer car is used that takes the rack into itself and supports the rack from the sides. In that case, the transfer car becomes simple and low, similarly to the rack. Lifting the rack clear of the base can be carried out in various ways. In the embodiment shown, the transfer car includes six wheels, in each one of which there is a lifting mechanism. Thus, with the aid of the mechanisms, the height of the transfer car can be altered so as to lift the rack clear of the base. The wheels can be arranged to operate jointly, so that they tend to keep the rack as straight as possible. Thus, the concrete element is sure to remain vertical and the transfer car can be moved over even an uneven base. In this case, there are three wheels in one frame. It is also possible to manufacture one or two-wheeled frames.

In addition, the wheels are preferably steerable, making the transfer extremely easy to control. This facilitates moving the racks, which does not require much space. The transfer car can be moved, for example, by a counterbalanced fork-lift truck or similar towing car. The towing point of the transfer car 11 is preferably located as closely as possible to the front axle of the towing car 31 (Figure 6). The combination then becomes easily controlled and the loading of the transfer car is transmitted to the axle of the towing car. At the same time, it is possible to use a small towing car, as a significant share of the combined mass of the rack and the concrete element is carried by the transfer car. The hydraulic pressure required by the lifting of the transfer car can be taken from the towing car, or a separate machine unit in the transfer car can be used. Electromechanical lifting devices can also be used.

Figure 6 shows schematically part of the layout of an element factory. Here, only the tipping station 32 and some of the production stages after it, which are mainly finishing operations, are shown. As such the actual concrete element is manufactured in a known manner. At the tipping station 32, the concrete element 12 is lifted into a vertical position and preferably placed immediately in a rack 10 according to the invention. Two concrete elements, which are a maximum of six metres long and four metres high, can, for example, be placed in one rack. Of course, more concrete elements that are shorter than this can be placed in the rack. Next, by utilizing a transfer car according to the invention, the rack together with the concrete elements is moved, for example to the washing station. Two racks, for example, can fit into the washing station. Thus, concrete elements that have already been washed can be taken by one and the same transfer car to the next post-treatment stage, or even directly to the store, where the concrete elements are stored in their racks. In this way, separate storage racks are unnecessary and lifting of the concrete elements is avoided. In addition, several racks can be moved using a single transfer car.

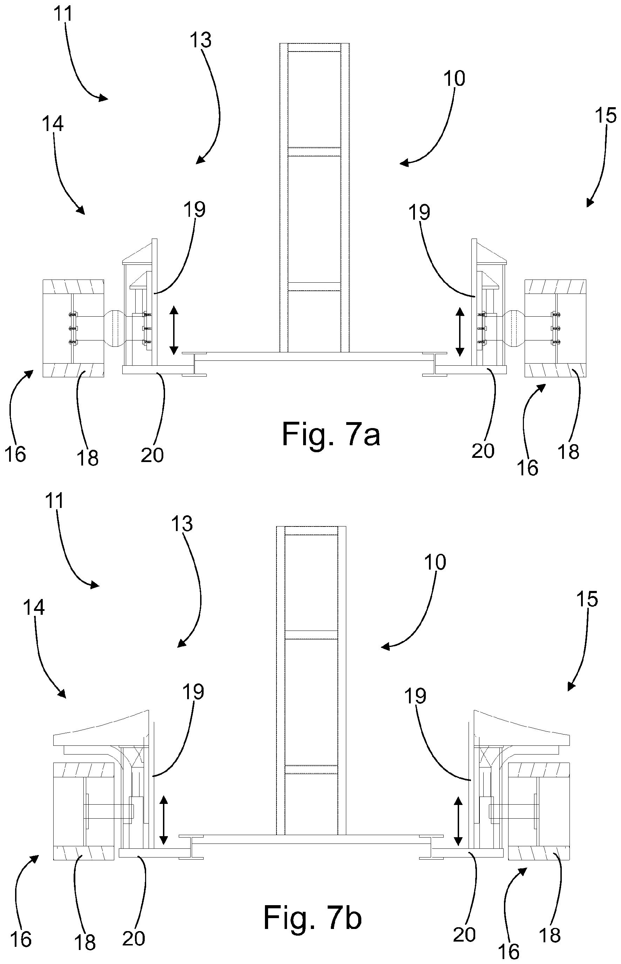

Figure 7a shows a cross-section of the transfer car 16 according to Figure 5. Here the wheels are parallel to the frames. Figure 7b shows a third embodiment of the transfer car. Mainly the support of the wheels differs from the embodiment of Figure 1b. More specifically, the wheel is supported from different sides in the embodiments. In various loading classes and space classes the wheel support can be implemented in the manner shown, when different properties will be achieved in the transfer car. The control of an individual wheel or series of wheels can be implemented, for example, hydraulically or pneumatically. Mechanisms implemented by means, for example, of a draw-bar or rack-and-pinion can also be used.

The narrowness of the rack brings other advantages. The dimensioning of vehicles has been taken into account in the width of the rack. Thus, the rack together with concrete elements can be taken onto a vehicle, thus avoiding one lift. In other words, the concrete element can be in one and the same rack during post-treatment, storage, and transportation. The operation of the vehicle can correspond to transfer car's self-loading operating principle, though the wheels need not necessarily turn and in other ways too the requirements of road traffic are taken into account in the construction of the vehicle.

By means of the equipment and operating principle according to the invention it is possible to simplify and accelerate the production of concrete elements. At the same time, the element factory itself can be made simpler and more flexible than before. The racks used are small in size and light in weight. Correspondingly, the transfer car is easy to control and can be used to largely replace large gantry cranes. The element factory's store can be simplified and sometimes even the entire store will be unnecessary. Further, the concrete element can be transported in the rack right up to the building site, thus minimizing the number of lifts.

The total width of the rack is preferably precisely 1560 mm, when it will also fit into a known vehicle. Despite its narrowness, two concrete elements, the thickness of which can be as much as 550 mm, will fit into the rack. The width of the framework can then be 400 - 500 mm, so that an operative will be able to walk on top of the framework and even be able to move inside the framework. With the dimensions in question, the mass of the rack is only 400 kilograms, whereas the mass of a known rack is more than 3000 kilograms. It has been possible to made the rack light, as the mass of a vertical concrete element is distributed evenly over the length of the rack and the transfer car is attached over the entire length of the rack.

## Claims

1. Method for manufacturing of a concrete element, in which method during the manufacturing of a concrete element, the concrete element (12) is supported on a rack (10), and the rack (10) is moved with a transfer car (11), which transfer car (11) is equipped with a frame structure (13) forming part of the transfer car (11), which frame structure (13) includes two essentially parallel frames (14, 15), which extend on both side of the rack (10), **characterized in that** after the manufacturing the concrete element (12) is supported on the same rack (10) during the storing and transporting of the concrete element (12), and each frame (14, 15) is equipped with a lifting-wheel unit (16), which is arranged essentially in the centre of said frames (14, 15) longitudinally.

2. Method according to Claim 1, **characterized in that** several racks (10) are moved with a single transfer car (11).

3. Method according to Claim 1 or 2, **characterized in that** the rack (10) is equipped with a framework (23) extending essentially over the entire length of the rack (10).

4. Method according to Claim 3, **characterized in that** the top of the framework (23) is arranged as a walkway (34).

5. Method according to Claim 3 or 4, **characterized in that** the space delimited by the framework (23) in the rack (10) is arranged smaller than the thickness of the concrete element (12).

6. Method according to any of Claims 1 - 5, **characterized in that** the width of the rack (10) corresponds to the nominal internal width of a self-loading trailer (22).

7. Method according any of Claims 1 - 6, **characterized in that** the distance S between the two longitudinal frames (14, 15) is implemented essentially greater than the total width L of the rack (10).

8. Method according to Claim 7, **characterized in that** the distance S is arranged as 1700 - 2000 mm.

9. Method according any of Claims 1 - 8, **characterized in that** the lifting-wheel unit (16) is arranged to be steerable.

10. Method according any of Claims 1 - 9, **characterized in that** the lifting-wheel unit (16) is equipped with several wheels (18), the rise of which is arranged to be independent of each other.

11. Method according any of Claims 1 - 10, **characterized in that** the total width K of the transfer car (11) is arranged as 3000 - 3500 mm.

## Patentansprüche

1. Verfahren zur Herstellung eines Betonelements, bei dem das Betonelement (12) während der Herstellung eines Betonelements auf einem Gestell (10) abgestützt wird und das Gestell (10) mit einem Transferwagen (11) bewegt wird, wobei der Transferwagen (11) mit einer Rahmenstruktur (13) ausgestattet ist, die Teil des Transferwagens (11) ist, wobei die Rahmenstruktur (13) zwei im Wesentlichen parallele Rahmen (14, 15) umfasst, die sich auf beiden Seiten des Gestells (10) erstrecken, **dadurch gekennzeichnet, dass** das Betonelement (12) nach der Herstellung während der Lagerung und des Transports des Betonelements (12) auf demselben Gestell (10) abgestützt ist und jeder Rahmen (14, 15) mit einer Hubradeinheit (16) ausgestattet ist, die im Wesentlichen in der Mitte der Rahmen (14, 15) in Längsrichtung angeordnet ist.

2. Verfahren nach Anspruch 1, **dadurch gekennzeichnet, dass** mehrere Gestelle (10) mit einem einzigen Transferwagen (11) bewegt werden.

3. Verfahren nach Anspruch 1 oder 2, **dadurch gekennzeichnet, dass** das Gestell (10) mit einem Gerüst (23) ausgestattet ist, das sich im Wesentlichen über die gesamte Länge des Gestells (10) erstreckt.

4. Verfahren nach Anspruch 3, **dadurch gekennzeichnet**,_ dass die Oberseite des Gerüsts (23) als ein Gehsteg (34) angeordnet ist.

5. Verfahren nach Anspruch 3 oder 4, **dadurch gekennzeichnet, dass** der durch das Gerüst (23) im Gestell (10) begrenzte Raum kleiner als die Dicke des Betonelements (12) gestaltet ist.

6. Verfahren nach einem der Ansprüche 1 - 5, **dadurch gekennzeichnet, dass** die Breite des Gestells (10) der Nenninnenbreite eines Selbstladeanhängers (22) entspricht.

7. Verfahren nach einem der Ansprüche 1 - 6, **dadurch gekennzeichnet, dass** der Abstand S zwischen den beiden Längsrahmen (14, 15) wesentlich größer als die Gesamtbreite L des Gestells (10) umgesetzt wird.

8. Verfahren nach Anspruch 7, **dadurch gekennzeichnet**,_ dass der Abstand S als 1700 - 2000 mm gestaltet ist.

9. Verfahren nach einem der Ansprüche 1 - 8, **dadurch gekennzeichnet, dass** die Hubradeinheit (16) lenkbar gestaltet ist.

10. Verfahren nach einem der Ansprüche 1 - 9, **dadurch gekennzeichnet, dass** die Hubradeinheit (16) mit mehreren Rädern (18) ausgestattet ist, deren Erhöhung unabhängig voneinander gestaltet ist.

11. Verfahren nach einem der Ansprüche 1 - 10, **dadurch gekennzeichnet, dass** die Gesamtbreite K des Transferwagens (11) als 3000 - 3500 mm gestaltet ist.

## Revendications

1. Procédé pour la fabrication d'un élément en béton, dans lequel, au cours de la fabrication d'un élément en béton, l'élément en béton (12) est en appui sur un support (10), et le support (10) est déplacé à l'aide d'un véhicule de transfert (11), lequel est équipé d'une structure à ossature (13) faisant partie du véhicule de transfert (11), ladite structure à ossature (13) incluant deux ossatures parallèles (14, 15), qui se prolongent des deux côtés du support (10), **caractérisé en ce que**, après la fabrication, l'élément en béton (12) est en appui sur le même support (10) pendant le stockage et le transport de l'élément en béton (12), et chaque ossature (14, 15) est équipée d'une unité à roues de levage (16), laquelle est positionnée au centre desdites ossatures (14, 15) de manière longitudinale.

2. Procédé conformément à la revendication 1, **caractérisé en ce que** plusieurs supports (10) sont déplacés par un seul véhicule de transfert (11).

3. Procédé conformément à la revendication 1 ou 2, **caractérisé en ce que** le support (10) est équipé d'un châssis (23) se prolongeant sur toute la longueur du support (10).

4. Procédé conformément à la revendication 3, **caractérisé en ce que** le dessus du châssis (23) sert de passerelle (34).

5. Procédé conformément à la revendication 3 ou 4, **caractérisé en ce que** l'espace délimité par le châssis (23) dans le support (10) est plus petit que l'épaisseur de l'élément en béton (12).

6. Procédé conformément aux revendications 1 à 5, **caractérisé en ce que** la largeur du support (10) correspond à la largeur interne nominale d'une remorque autochargeuse (22).

7. Procédé conformément aux revendications 1 à 6, **caractérisé en ce que** la distance (S) entre les deux ossatures longitudinales (14, 15) est plus grande que la largeur totale L du support (10).

8. Procédé conformément à la revendication 7, **caractérisé en ce que** la distance S est de 1 700 à 2 000 mm.

9. Procédé conformément à l'une quelconque des revendications 1 à 8, **caractérisé en ce que** l'unité à roues de levage (16) peut être orientée.

10. Procédé conformément à l'une quelconque des revendications 1 à 9, **caractérisé en ce que** l'unité à roues de levage (16) est équipée de plusieurs roues (18), lesquelles se soulèvent indépendamment les unes des autres.

11. Procédé conformément à l'une quelconque des revendications 1 à 10, **caractérisé en ce que** la largeur totale K du véhicule de transfert (11) est de 3 000 à 3 500 mm.
